# EUROPEAN PATENT APPLICATION

(11) **EP 3 319 378 A1**
(43) Date of publication of application: **09.05.2018**
(21) Application number: 15899242.0
(22) Date of filing: 29.07.2015
(51) Int. Cl.: H04W 68/02

(54) **PAGING PROCESSING METHOD AND RADIO NETWORK CONTROLLER**

(71) Applicant: Huawei Technologies Co., Ltd., Longgang District Shenzhen, Guangdong 518129 (CN)
(72) Inventor: SU, Yongfeng, Shenzhen Guangdong 518129 (CN)
(74) Representative: Maiwald Patentanwalts GmbH
(86) International application number: PCT/CN2015/085398
(87) International publication number: WO 2017/015890

(57) **Abstract**

Embodiments of the present invention disclose a paging processing method, including: determining, by a radio network controller, a connection status of a target terminal; determining, by the radio network controller, a first paging policy corresponding to the connection status, and paging the target terminal according to the first paging policy; and if no response is made to the paging, determining, by the radio network controller, a second paging policy corresponding to the connection status, and paging the target terminal according to the second paging policy. Correspondingly, the embodiments of the present invention further disclose a radio network controller. By means of the present invention, a paging success rate can be increased in a scenario of an abnormal network.

## Description

### TECHNICAL FIELD

The present invention relates to the field of wireless communications technologies, and in particular, to a paging processing method and a radio network controller.

### BACKGROUND

In a wireless communications system, a paging success rate is an important indicator for measuring user experience of a terminal. Before performing paging, a radio network controller (full name: Radio Network Controller, RNC for short) first needs to determine a connection status of the terminal. An RRC sub-layer classifies the connection status into an idle mode and a connected mode according to whether there is an RRC connection. The connected mode is classified, according to different statuses of radio resource allocation, into four states: a CELL_DCH state, a CELL_FACH state, a CELL_PCH state, and a URA_PCH state. The RNC triggers transition between states of the RRC sub-layer according to changes in the statuses of the radio resource allocation, and triggers transition between the idle mode and the connected mode by establishing and releasing an RRC connection.

If the terminal is in the CELL_DCH state or the CELL_FACH state, the RNC sends a TYPE2 paging message on a specified channel. If the terminal is in the CELL_PCH state, the URA_PCH state, or the idle mode (that is, an idle state), the RNC sends a TYPE1 paging message on a specified channel.

However, in some abnormal scenarios, such as in a state transition process or a process in which an uplink is out of synchronization and is abnormal, the RNC initiates paging according to an original state. For example, in a process of transiting from the CELL_DCH state to the CELL_FACH state, if the transition is not completed, the RNC sends a TYPE2 paging message only on a DCH channel, but actually, the transition may have been completed. Consequently, in a scenario of an abnormal network, a paging success rate is reduced if the paging processing method in the prior art is still used.

### SUMMARY

The present invention provides a paging processing method and a radio network controller, to increase a paging success rate in a scenario of an abnormal network.

A first aspect of the present invention provides a paging processing method, including:
determining, by a radio network controller, a connection status of a target terminal;
determining, by the radio network controller, a first paging policy corresponding to the connection status, and paging the target terminal according to the first paging policy; and
if no response is made to the paging, determining, by the radio network controller, a second paging policy corresponding to the connection status, and paging the target terminal according to the second paging policy.

In a first possible implementation of the first aspect, if the connection status is a CELL_DCH state or a CELL_FACH state, the determining, by the radio network controller, a second paging policy corresponding to the connection status, and paging the target terminal according to the second paging policy includes:
sending, by the radio network controller, a TYPE1 paging message at least on a paging channel PCH.

In a second possible implementation of the first aspect, if the connection status is transited from a CELL_DCH state to a CELL_FACH state, or transited from a CELL_FACH state to a CELL_DCH state, the determining, by the radio network controller, a second paging policy corresponding to the connection status, and paging the target terminal according to the second paging policy includes:
sending, by the radio network controller, a TYPE2 paging message separately on a dedicated channel DCH and a forward access channel FACH.

In a third possible implementation of the first aspect, if the connection status is transited from a CELL_FACH state to a CELL_PCH state or a URA_PCH state, the determining, by the radio network controller, a second paging policy corresponding to the connection status, and paging the target terminal according to the second paging policy includes:
sending, by the radio network controller, a TYPE2 paging message and a TPYE1 paging message respectively on a FACH and a PCH.

In a fourth possible implementation of the first aspect, if the connection status is a CELL_PCH state, the determining, by the radio network controller, a second paging policy corresponding to the connection status, and paging the target terminal according to the second paging policy includes:
determining, by the radio network controller, a location area in which the target terminal is located, and delivering a TYPE1 paging message on PCHs of all cells in the location area.

With reference to any one of the first aspect or the first to the fourth possible implementations of the first aspect, in a fifth possible implementation, before the determining, by a radio network controller, a connection status of a target terminal, the method further includes:
receiving, by the radio network controller, paging for the target terminal from a core network; or
determining, by the radio network controller, to send downlink data to the target terminal.

A second aspect of the present invention provides a radio network controller, including:
a connection status determining unit, configured to determine a connection status of a target terminal;
a first paging processing unit, configured to: determine a first paging policy corresponding to the connection status, and page the target terminal according to the first paging policy; and
a second paging processing unit, configured to: if no response is made to the paging, determine a second paging policy corresponding to the connection status, and page the target terminal according to the second paging policy.

In a first possible implementation of the second aspect, if the connection status is a CELL_DCH state or a CELL_FACH state, the second paging processing unit is specifically configured to:
send a TYPE1 paging message at least on a paging channel PCH.

In a second possible implementation of the second aspect, if the connection status is transited from a CELL_DCH state to a CELL_FACH state, or transited from a CELL_FACH state to a CELL_DCH state, the second paging processing unit is specifically configured to:
send a TYPE2 paging message separately on a dedicated channel DCH and a forward access channel FACH.

In a third possible implementation of the second aspect, if the connection status is transited from a CELL_FACH state to a CELL_PCH state or a URA_PCH state, the second paging processing unit is specifically configured to:
send a TYPE2 paging message and a TPYE1 paging message respectively on a FACH and a PCH.

In a fourth possible implementation of the second aspect, if the connection status is a CELL_PCH state, the second paging processing unit is specifically configured to:
determine a location area in which the target terminal is located, and deliver a TYPE1 paging message on PCHs of all cells in the location area.

With reference to any one of the second aspect or the first to the fourth possible implementations of the second aspect, in a fifth possible implementation, the radio network controller further includes:
a control unit, configured to: when receiving paging for the target terminal from a core network, or when determining to send downlink data to the target terminal, trigger the connection status determining unit to determine the connection status of the target terminal.

A third aspect of the present invention provides a radio network controller, including: a network interface, a memory, and a processor, where the memory stores a set of programs, and the processor is configured to invoke the programs stored in the memory to perform the following operations:
determining a connection status of a target terminal;
determining a first paging policy corresponding to the connection status, and paging the target terminal according to the first paging policy; and
if no response is made to the paging, determining a second paging policy corresponding to the connection status, and paging the target terminal according to the second paging policy.

A fourth aspect of the present invention provides a computer storage medium, where the computer storage medium stores a program, and when the program is executed, some or all of the steps in the first aspect are performed.

Implementation of the present invention has the following beneficial effects:
A radio network controller determines a connection status of a target terminal, determines a first paging policy corresponding to the connection status, and pages the target terminal according to the first paging policy. If no response is made to the paging, it may be determined that a network is abnormal, and the RNC determines a second paging policy corresponding to the connection status, and pages the target terminal according to the second paging policy. Compared with the prior art in which when no response is made to the paging, the first paging policy is still used for paging, a paging success rate is increased, thereby improving user experience.

### BRIEF DESCRIPTION OF DRAWINGS

To describe the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a paging processing method according to an embodiment of the present invention;
FIG. 2 is a schematic flowchart of another paging processing method according to an embodiment of the present invention;
FIG. 3 is a schematic flowchart of still another paging processing method according to an embodiment of the present invention;
FIG. 4 is a schematic flowchart of still another paging processing method according to an embodiment of the present invention;
FIG. 5 is a schematic flowchart of still another paging processing method according to an embodiment of the present invention;
FIG. 6 is a schematic flowchart of still another paging processing method according to an embodiment of the present invention;
FIG. 7 is a schematic structural diagram of a radio network controller according to an embodiment of the present invention; and
FIG. 8 is a schematic structural diagram of another radio network controller according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

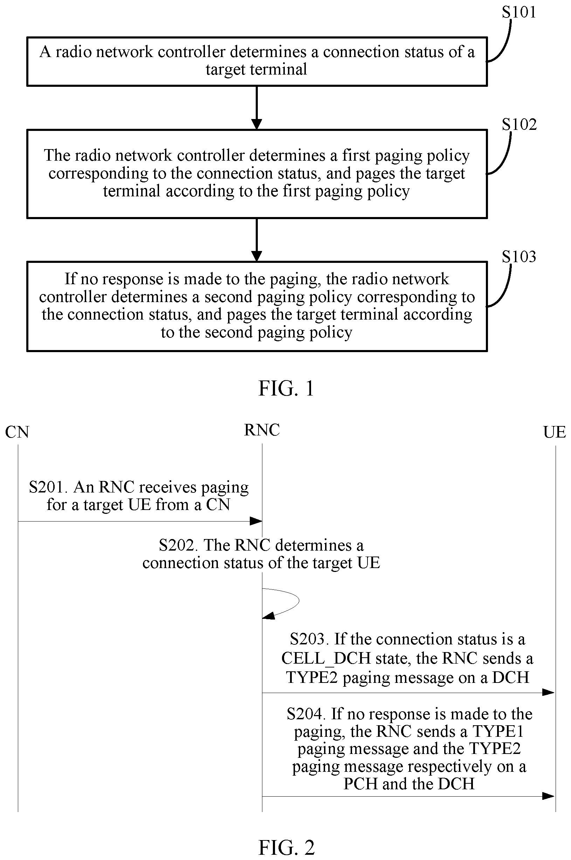

Referring to FIG. 1, FIG. 1 is a schematic flowchart of a paging processing method according to an embodiment of the present invention. As shown in FIG. 1, the paging processing method may include the following steps.

Step S101: A radio network controller determines a connection status of a target terminal.

An RRC sub-layer classifies the connection status into an idle mode and a connected mode according to whether there is an RRC connection. The connected mode is classified, according to different statuses of radio resource allocation, into four states: a CELL_DCH state, a CELL_FACH state, a CELL_PCH state, and a URA_PCH state.

In the CELL_DCH state, a dedicated physical channel (DPCH) and the last physical downlink shared channel (PDSCH) are allocated to the target terminal. The state may be entered from the idle mode or by establishing a dedicated channel (DCH) in the CELL_FACH state. The target terminal may transfer to the CELL_FACH state according to explicit signaling, for example, transfers when an inactivity timer expires.

In the CELL_FACH state, the RNC does not allocate the DPCH to the target terminal, but may transmit signaling or a small amount of user data by using a random access channel (RACH) and a forward access channel (FACH). When an inactivity timer on the FACH expires, the target terminal transfers to the CELL_PCH state according to explicit signaling.

In the CELL_PCH state, when a network performs paging or when the target terminal performs accessing by using any uplink for cell reselection (that is, a cell updating process), the target terminal transfers to the URA_PCH.

In the URA_PCH state, except that when an UTRAN registration area (URA) changes, the target terminal performs a cell updating process, the state is similar to the CELL_PCH. When a quantity of cell updates exceeds a particular threshold, the target terminal may transfer to the URA_PCH state according to explicit signaling.

Step S102: The radio network controller determines a first paging policy corresponding to the connection status, and pages the target terminal according to the first paging policy.

If the RNC determines that the connection status is the CELL_DCH state, the determining, by the RNC, a first paging policy corresponding to the connection status, and paging the target terminal according to the first paging policy may be specifically: sending a TYPE2 paging message on a dedicated channel DCH.

If the RNC determines that the connection status is the CELL_FACH state, the determining, by the RNC, a first paging policy corresponding to the connection status, and paging the target terminal according to the first paging policy may be specifically: sending a TYPE2 paging message on a forward access channel FACH.

If the RNC determines that the connection status is transited from the CELL_DCH state to the CELL_FACH state, and the RNC has not received a transition ending instruction sent by the target terminal, the determining, by the RNC, a first paging policy corresponding to the connection status, and paging the target terminal according to the first paging policy may be specifically: sending a TYPE2 paging message on a DCH.

If the RNC determines that the connection status is transited from the CELL_FACH state to the CELL_DCH state, and the RNC has not received a transition ending instruction sent by the target terminal, the determining, by the RNC, a first paging policy corresponding to the connection status, and paging the target terminal according to the first paging policy may be specifically: sending a TYPE2 paging message on a FACH.

If the RNC determines that the connection status is transited from the CELL_FACH state to the CELL_PCH state or the URA_PCH state, and the RNC has not received a transition ending instruction sent by the target terminal, the determining, by the RNC, a first paging policy corresponding to the connection status, and paging the target terminal according to the first paging policy may be specifically: sending a TYPE2 paging message on a FACH.

If the RNC determines that the connection status is the CELL_PCH state, the determining, by the RNC, a first paging policy corresponding to the connection status, and paging the target terminal according to the first paging policy may be specifically: sending a TYPE1 paging message on a paging channel PCH of a cell in which the target terminal is located.

Step S103: If no response is made to the paging, the radio network controller determines a second paging policy corresponding to the connection status, and pages the target terminal according to the second paging policy.

The target terminal is paged according to the first paging policy corresponding to the connection status. If a quantity of RLC-layer data retransmissions reaches a preset threshold, or if no response is made to a handover procedure, or if it is detected that an uplink has been out of synchronization for longer than a preset time threshold, it is determined that no response is made to the paging, and the RNC determines the second paging policy corresponding to the connection status and pages the target terminal according to the second paging policy.

If the connection status is the CELL_DCH state or the CELL_FACH state, the determining, by the RNC, a second paging policy corresponding to the connection status, and paging the target terminal according to the second paging policy may be specifically: sending a TYPE1 paging message at least on a paging channel PCH.

During specific implementation, if the connection status is the CELL_DCH state, when the RNC re-initiates paging, in addition to sending a TYPE1 paging message on the PCH, the RNC may further send a TYPE2 paging message on a DCH. If the connection status is the CELL_FACH state, when the RNC re-initiates paging, in addition to sending a TYPE1 paging message on the PCH, the RNC may further send a TYPE2 paging message on a FACH.

If the connection status is transited from the CELL_DCH state to the CELL_FACH state, or transited from the CELL_FACH state to the CELL_DCH state, the determining, by the RNC, a second paging policy corresponding to the connection status, and paging the target terminal according to the second paging policy may be specifically: sending a TYPE2 paging message separately on a DCH and a FACH. Regardless of whether the transition is completed or not, a specified paging message is sent separately on specified channels before and after the transition, increasing a paging success rate when a network is abnormal.

If the connection status is transited from the CELL_FACH state to the CELL_PCH state or the URA_PCH state, the determining, by the RNC, a second paging policy corresponding to the connection status, and paging the target terminal according to the second paging policy may be specifically: sending a TYPE2 paging message and a TPYE1 paging message respectively on a FACH and a PCH. Regardless of whether the transition is completed or not, specified paging messages are sent respectively on specified channels before and after the transition, increasing a paging success rate when a network is abnormal.

If the connection status is the CELL_PCH state, the determining, by the RNC, a second paging policy corresponding to the connection status, and paging the target terminal according to the second paging policy may be specifically: determining a location area in which the target terminal is located, and delivering a TYPE1 paging message on PCHs of all cells in the location area. If the TPYE1 paging message is sent, according to the first paging policy, on the PCH of the cell in which the target terminal is located, and no response is made to the paging, it means that the target terminal may have handed over to another cell. Therefore, a paging range is expanded, and the TPYE1 paging message is sent on the PCHs of all the cells in the location area in which the target terminal is located.

A radio network controller determines a connection status of a target terminal, determines a first paging policy corresponding to the connection status, and pages the target terminal according to the first paging policy. If no response is made to the paging, it may be determined that a network is abnormal, and the RNC determines a second paging policy corresponding to the connection status, and pages the target terminal according to the second paging policy. Compared with the prior art in which when no response is made to the paging, the first paging policy is still used for paging, a paging success rate is increased, thereby improving user experience.

Referring to FIG. 2, FIG. 2 is a schematic flowchart of another paging processing method according to an embodiment of the present invention. As shown in FIG. 2, the paging processing method may include the following steps:
Step S201: An RNC receives paging for a target terminal UE from a core network CN.
Step S202: The RNC determines a connection status of the target UE.
Step S203: If the connection status is a CELL_DCH state, the RNC sends a TYPE2 paging message on a DCH.
Step S204: If no response is made to the paging, the RNC sends a TYPE1 paging message and the TYPE2 paging message respectively on a PCH and the DCH.

If the connection status of the target UE is the CELL_DCH state, the RNC sends the TYPE2 paging message on the DCH. If no response is made to the paging, it may be determined that a network is abnormal, and the RNC sends the TYPE1 paging message and the TYPE2 paging message respectively on the PCH and the DCH. Compared with the prior art in which when no response is made to the paging, only the TYPE2 paging message is still sent on the DCH, a paging success rate is increased, thereby improving user experience.

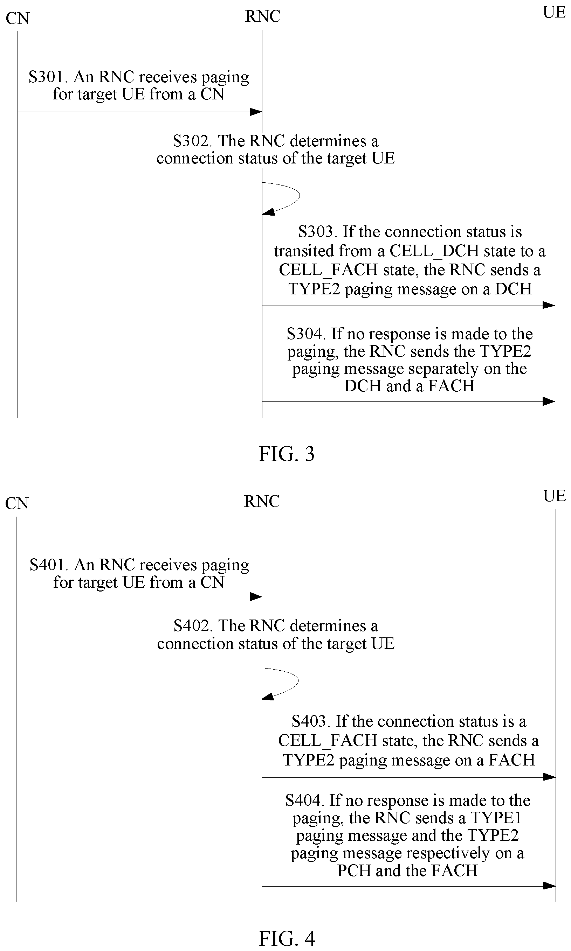

Referring to FIG. 3, FIG. 3 is a schematic flowchart of still another paging processing method according to an embodiment of the present invention. As shown in FIG. 3, the paging processing method may include the following steps:
Step S301: An RNC receives paging for target UE from a CN.
Step S302: The RNC determines a connection status of the target UE.
Step S303: If the connection status is transited from a CELL_DCH state to a CELL_FACH state, the RNC sends a TYPE2 paging message on a DCH.
Step S304: If no response is made to the paging, the RNC sends the TYPE2 paging message separately on the DCH and a FACH.

If the connection status of the target UE is transited from the CELL_DCH state to the CELL_FACH state, the RNC sends the TYPE2 paging message on the DCH. If no response is made to the paging, it may be determined that a network is abnormal, and the RNC sends the TYPE2 paging message separately on the DCH and the FACH. Compared with the prior art in which when no response is made to the paging, the TYPE2 paging message is still sent only on the DCH, a paging success rate is increased, thereby improving user experience.

Referring to FIG. 4, FIG. 4 is a schematic flowchart of still another paging processing method according to an embodiment of the present invention. As shown in FIG. 4, the paging processing method may include the following steps:
Step S401: An RNC receives paging for target UE from a CN.
Step S402: The RNC determines a connection status of the target UE.
Step S403: If the connection status is a CELL_FACH state, the RNC sends a TYPE2 paging message on a FACH.
Step S404: If no response is made to the paging, the RNC sends a TYPE1 paging message and the TYPE2 paging message respectively on a PCH and the FACH.

If the connection status of the target UE is the CELL_FACH state, the RNC sends the TYPE2 paging message on the FACH. If no response is made to the paging, it may be determined that a network is abnormal, and the RNC sends the TYPE1 paging message and the TYPE2 paging message respectively on the PCH and the FACH. Compared with the prior art in which when no response is made to the paging, only the TYPE2 paging message is still sent on the FACH, a paging success rate is increased, thereby improving user experience.

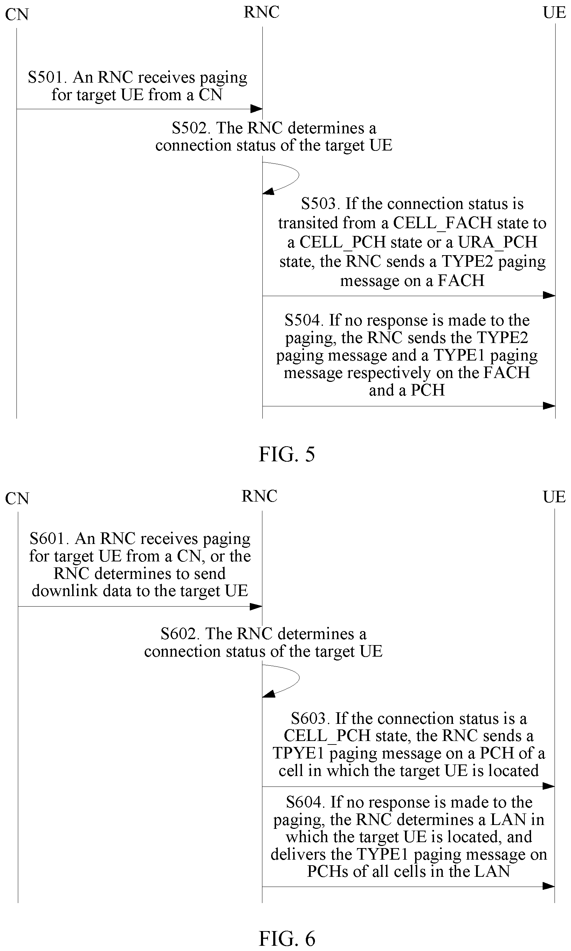

Referring to FIG. 5, FIG. 5 is a schematic flowchart of still another paging processing method according to an embodiment of the present invention. As shown in FIG. 5, the paging processing method may include the following steps:
Step S501: An RNC receives paging for target UE from a CN.
Step S502: The RNC determines a connection status of the target UE.
Step S503: If the connection status is transited from a CELL_FACH state to a CELL_PCH state or a URA_PCH state, the RNC sends a TYPE2 paging message on a FACH.
Step S504: If no response is made to the paging, the RNC sends the TYPE2 paging message and a TPYE1 paging message respectively on the FACH and a PCH.

If the connection status of the target UE is transited from the CELL_FACH state to the CELL_PCH state or the URA_PCH state, the RNC sends the TYPE2 paging message on the FACH. If no response is made to the paging, it may be determined that a network is abnormal, and the RNC sends the TYPE2 paging message and the TPYE1 paging message respectively on the FACH and the PCH. Compared with the prior art in which when no response is made to the paging, only the TYPE2 paging message is still sent on the FACH, a paging success rate is increased, thereby improving user experience.

Referring to FIG. 6, FIG. 6 is a schematic flowchart of still another paging processing method according to an embodiment of the present invention. As shown in FIG. 6, the paging processing method may include the following steps:
Step S601: An RNC receives paging for target UE from a core network CN, or the RNC determines to send downlink data to the target UE.
Step S602: The RNC determines a connection status of the target UE.
Step S603: If the connection status is a CELL_PCH state, the RNC sends a TPYE1 paging message on a PCH of a cell in which the target UE is located.
Step S604: If no response is made to the paging, the RNC determines a location area LAN in which the target UE is located, and delivers the TYPE1 paging message on PCHs of all cells in the LAN.

If the connection status of the target UE is the CELL_PCH state, the RNC sends the TPYE1 paging message on the PCH of the cell in which the target UE is located. If no response is made to the paging, it means that the target UE may have handed over to another cell, and the RNC delivers the TYPE1 paging message on the PCHs of all the cells in the LAN in which the target UE is located. Compared with the prior art in which when no response is made to the paging, the TYPE1 paging message is sent only on a PCH of an original cell, a paging success rate is increased, thereby improving user experience.

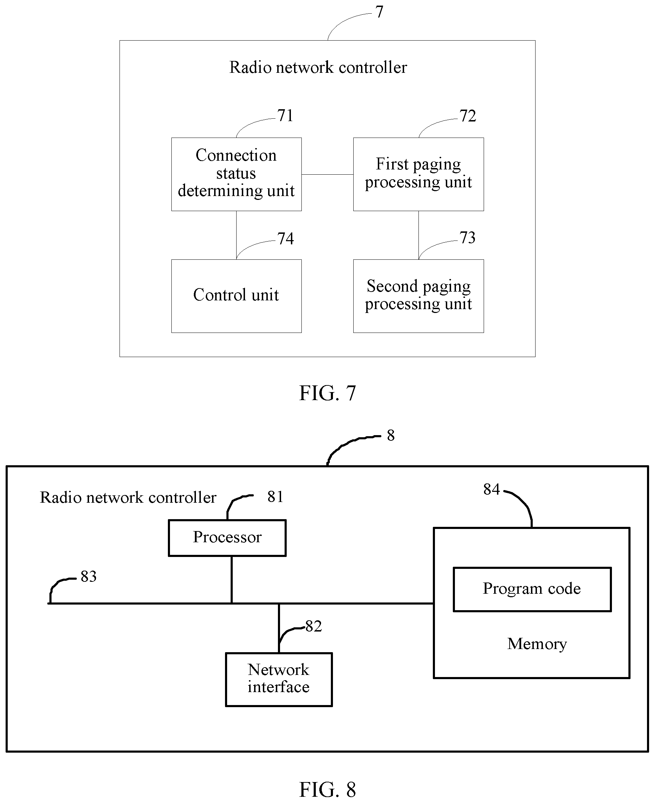

Referring to FIG. 7, FIG. 7 is a schematic structural diagram of a radio network controller according to an embodiment of the present invention. The radio network controller 7 shown in FIG. 7 may include at least: a connection status determining unit 71, a first paging processing unit 72, and a second paging processing unit 73.

The connection status determining unit 71 is configured to determine a connection status of a target terminal.

The first paging processing unit 72 is configured to: determine a first paging policy corresponding to the connection status, and page the target terminal according to the first paging policy.

The second paging processing unit 73 is configured to: if no response is made to the paging, determine a second paging policy corresponding to the connection status, and page the target terminal according to the second paging policy.

If the connection status is a CELL_DCH state or a CELL_FACH state, the second paging processing unit 73 may be specifically configured to send a TYPE1 paging message at least on a paging channel PCH.

If the connection status is transited from a CELL_DCH state to a CELL_FACH state, or transited from a CELL_FACH state to a CELL_DCH state, the second paging processing unit 73 may be specifically configured to send a TYPE2 paging message separately on a DCH and a FACH.

If the connection status is transited from a CELL_FACH state to a CELL_PCH state or a URA_PCH state, the second paging processing unit 73 may be specifically configured to send a TYPE2 paging message and a TPYE1 paging message respectively on a FACH and a PCH.

If the connection status is a CELL_PCH state, the second paging processing unit 73 may be specifically configured to: determine a location area in which the target terminal is located, and deliver a TYPE1 paging message on PCHs of all cells in the location area.

Further, the radio network controller 7 may further include a control unit 74, configured to: when receiving paging for the target terminal from a core network, or when determining to send downlink data to the target terminal, trigger the connection status determining unit 71 to determine the connection status of the target terminal.

It may be understood that, functions of functional modules of the radio network controller 7 in this embodiment may be specifically implemented according to the methods in the foregoing method embodiments. For specific functions thereof, refer to related descriptions in the foregoing method embodiments corresponding to FIG. 1 to FIG. 6, and details are not described herein again.

FIG. 8 is a schematic structural diagram of another radio network controller according to an embodiment of the present invention. As shown in FIG. 8, the radio network controller 8 may include: at least one processor 81, such as a CPU, at least one network interface 82, at least one communications bus 83, and a memory 84. The communications bus 83 is configured to implement connection and communication between the components. The memory 84 may be a high-speed RAM memory, or a non-volatile memory (non-volatile memory), for example, at least one magnetic disk memory. Optionally, the memory 84 may be at least one storage apparatus that is located far away from the processor 81. The memory 84 stores a set of program code, and the processor 81 is configured to invoke the program code stored in the memory 84, to perform the following operations:
determining a connection status of a target terminal;
determining a first paging policy corresponding to the connection status, and paging the target terminal according to the first paging policy; and
if no response is made to the paging, determining a second paging policy corresponding to the connection status, and paging the target terminal according to the second paging policy.

Optionally, if the connection status is a CELL_DCH state or a CELL_FACH state, that the processor 81 determines the second paging policy corresponding to the connection status, and pages the target terminal according to the second paging policy may be specifically: sending a TYPE1 paging message at least on a PCH.

Optionally, if the connection status is transited from a CELL_DCH state to a CELL_FACH state, or transited from a CELL_FACH state to a CELL_DCH state, that the processor 81 determines the second paging policy corresponding to the connection status, and pages the target terminal according to the second paging policy may be specifically: sending a TYPE2 paging message separately on a DCH and a FACH.

Optionally, if the connection status is transited from a CELL_FACH state to a CELL_PCH state or a URA_PCH state, that the processor 81 determines the second paging policy corresponding to the connection status, and pages the target terminal according to the second paging policy may be specifically: sending a TYPE2 paging message and a TPYE1 paging message respectively on a FACH and a PCH.

Optionally, if the connection status is a CELL_PCH state, that the processor 81 determines the second paging policy corresponding to the connection status, and pages the target terminal according to the second paging policy may be specifically: determining a location area in which the target terminal is located, and delivering a TYPE1 paging message on PCHs of all cells in the location area.

Further, before determining the connection status of the target terminal, the processor 81 may further perform the following operation:
receiving paging for the target terminal from a core network; or
determine to send downlink data to the target terminal.

It may be understood that, functions of functional modules of the radio network controller 8 in this embodiment may be specifically implemented according to the methods in the foregoing method embodiments. For specific functions thereof, refer to related descriptions in the foregoing method embodiments corresponding to FIG. 1 to FIG. 6, and details are not described herein again.

An embodiment of the present invention further provides a computer storage medium. The computer storage medium stores a program, and when the program is executed, some or all of the steps of the methods described in the embodiments of the present invention with reference to FIG. 1 to FIG. 6 are performed.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

What are disclosed above are merely examples of embodiments of the present invention, and certainly are not intended to limit the protection scope of the present invention. Therefore, equivalent variations made in accordance with the claims of the present invention shall fall within the scope of the present invention.

## Claims

1. A paging processing method, comprising:
determining, by a radio network controller, a connection status of a target terminal;
determining, by the radio network controller, a first paging policy corresponding to the connection status, and paging the target terminal according to the first paging policy; and
if no response is made to the paging, determining, by the radio network controller, a second paging policy corresponding to the connection status, and paging the target terminal according to the second paging policy.

2. The method according to claim 1, wherein if the connection status is a CELL_DCH state or a CELL_FACH state, the determining, by the radio network controller, a second paging policy corresponding to the connection status, and paging the target terminal according to the second paging policy comprises:
sending, by the radio network controller, a TYPE1 paging message at least on a paging channel PCH.

3. The method according to claim 1, wherein if the connection status is transited from a CELL_DCH state to a CELL_FACH state, or transited from a CELL_FACH state to a CELL_DCH state, the determining, by the radio network controller, a second paging policy corresponding to the connection status, and paging the target terminal according to the second paging policy comprises:
sending, by the radio network controller, a TYPE2 paging message separately on a dedicated channel DCH and a forward access channel FACH.

4. The method according to claim 1, wherein if the connection status is transited from a CELL_FACH state to a CELL_PCH state or a URA_PCH state, the determining, by the radio network controller, a second paging policy corresponding to the connection status, and paging the target terminal according to the second paging policy comprises:
sending, by the radio network controller, a TYPE2 paging message and a TPYE1 paging message respectively on a FACH and a PCH.

5. The method according to claim 1, wherein if the connection status is a CELL_PCH state, the determining, by the radio network controller, a second paging policy corresponding to the connection status, and paging the target terminal according to the second paging policy comprises:
determining, by the radio network controller, a location area in which the target terminal is located, and delivering a TYPE1 paging message on PCHs of all cells in the location area.

6. The method according to any one of claims 1 to 5, wherein before the determining, by a radio network controller, a connection status of a target terminal, the method further comprises:
receiving, by the radio network controller, paging for the target terminal from a core network; or
determining, by the radio network controller, to send downlink data to the target terminal.

7. A radio network controller, comprising:
a connection status determining unit, configured to determine a connection status of a target terminal;
a first paging processing unit, configured to: determine a first paging policy corresponding to the connection status, and page the target terminal according to the first paging policy; and
a second paging processing unit, configured to: if no response is made to the paging, determine a second paging policy corresponding to the connection status, and page the target terminal according to the second paging policy.

8. The radio network controller according to claim 7, wherein if the connection status is a CELL_DCH state or a CELL_FACH state, the second paging processing unit is specifically configured to:
send a TYPE1 paging message at least on a paging channel PCH.

9. The radio network controller according to claim 7, wherein if the connection status is transited from a CELL_DCH state to a CELL_FACH state, or transited from a CELL_FACH state to a CELL_DCH state, the second paging processing unit is specifically configured to:
send a TYPE2 paging message separately on a dedicated channel DCH and a forward access channel FACH.

10. The radio network controller according to claim 7, wherein if the connection status is transited from a CELL_FACH state to a CELL_PCH state or a URA_PCH state, the second paging processing unit is specifically configured to:
send a TYPE2 paging message and a TPYE1 paging message respectively on a FACH and a PCH.

11. The radio network controller according to claim 7, wherein if the connection status is a CELL_PCH state, the second paging processing unit is specifically configured to:
determine a location area in which the target terminal is located, and deliver a TYPE1 paging message on PCHs of all cells in the location area.

12. The radio network controller according to any one of claims 7 to 11, wherein the radio network controller further comprises:
a control unit, configured to: when receiving paging for the target terminal from a core network, or when determining to send downlink data to the target terminal, trigger the connection status determining unit to determine the connection status of the target terminal.

13. A radio network controller, comprising: a network interface, a memory, and a processor, wherein the memory stores a set of programs, and the processor is configured to invoke the programs stored in the memory to perform the following operations:
determining a connection status of a target terminal;
determining a first paging policy corresponding to the connection status, and paging the target terminal according to the first paging policy; and
if no response is made to the paging, determining a second paging policy corresponding to the connection status, and paging the target terminal according to the second paging policy.

14. A computer storage medium, wherein the computer storage medium stores a program, and when the program is executed, the steps according to any one of claims 1 to 6 are performed.
